# FASCICULE DE BREVET EUROPEEN

(11) **EP 3 052 441 B1**
(45) Date de publication et mention de la délivrance du brevet: **29.07.2020**
(21) Numéro de dépôt: 14793230.5
(22) Date de dépôt: 30.09.2014
(51) Int. Cl.: C01B 32/20, C04B 35/52, H01M 4/13, H01M 4/38

(54) **ÉLECTRODE POUR BATTERIE DE STOCKAGE D'ÉNERGIE ÉLECTRIQUE COMPRENANT UN MATÉRIAU COMPOSITE GRAPHITE/SILICIUM/FIBRES DE CARBONE**
ELEKTRODE FÜR EINE STROMSPEICHERBATTERIE MIT EINEM GRAPHIT-/SILICIUM-/KOHLEFASERVERBUNDSTOFF
ELECTRODE FOR AN ELECTRIC ENERGY STORAGE BATTERY COMPRISING A GRAPHITE/SILICON/CARBON FIBRE COMPOSITE MATERIAL

(30) Priorité: 30.09.2013 FR 1359429
(43) Date de publication de la demande: 10.08.2016
(73) Titulaire: Renault S.A.S., 92100 Boulogne-Billancourt (FR)
(72) Inventeur: BOHNKE, Marc, 38450 Le Gua (FR); CHAZELLE, Sophie, 38210 Vourey (FR); GUTEL, Elise, 38113 Veurez-voroize (FR); LORFEUVRE, Coralie, 73100 Brison Saint Innocent (FR); CHAKIR, Mohammed, 91180 St Germain les Arpajon (FR)
(86) Numéro de dépôt international: PCT/FR2014/052456
(87) Numéro de publication internationale: WO 2015/044618

(56) Documents cités:
- WO-A2-2004/049473
- WO-A2-2011/056847
- JP-A- H0 226 867
- US-A1- 2008 003 503
- US-A1- 2011 177 393

## Description

L'invention porte sur un matériau pour électrode à base de graphite comprenant du silicium et des fibres de carbone.

Plus précisément, l'invention concerne un matériau composite pour électrode à base de carbone graphite comprenant un broyât, dispersé au sein du carbone graphite, d'un mélange intime de silicium et de fibres de carbone.

L'invention concerne également une électrode pour batterie de stockage d'énergie électrique comprenant un tel matériau.

Enfin, l'invention concerne une batterie de stockage d'énergie électrique comprenant une telle électrode.

Les accumulateurs Li-ion sont de plus en plus utilisés comme source d'énergie autonome, en particulier dans les applications liées à la mobilité électrique. Cette tendance s'explique par, notamment, des densités d'énergie massique et volumique nettement supérieures à celles des accumulateurs classiques nickel cadmium (Ni-Cd) et nickel-hydrure métallique (Ni-MH) et également par une baisse des coûts au kilowattheure liée à cette technologie.

Les matériaux à base de carbone, en particulier de graphite ont été développés avec succès et largement commercialisés comme matériaux électrochimiquement actifs d'électrode négative pour accumulateurs Li-ion. Ces matériaux sont particulièrement performants du fait de leur structure propice à l'intercalation et la désintercalation du lithium et de leur stabilité au cours des différents cycles de charge et de décharge. Toutefois, la capacité spécifique théorique du graphique (372 mAh/g) reste largement inférieure à celle du lithium métallique (4000 mAh/g).

Certains métaux susceptibles d'incorporer le lithium se sont révélés être des alternatives prometteuses aux matériaux d'électrodes négatives de référence à base de carbone cristallin. En particulier, avec une capacité théorique estimée à 3578 mAh/g, le silicium représente une alternative intéressante au graphite.

Néanmoins, à l'heure actuelle, une exploitation viable des électrodes à base de silicium n'est pas envisageable car les accumulateurs Li-ion contenant de telles électrodes présentent des problèmes de perte de capacité lors des cycles de charge/décharge répétés, et ce quel que soit le régime de courant envisagé. Ce problème est inhérent à la présence de silicium. En effet, lors de la charge, la réduction des ions lithium par réaction électrochimique conduit à la formation d'un alliage LiₓSi.

Comme décrit par Koller and al., « High capacity graphite-silicon composite anode material for lithium-ion batteries », Journal of Power Sources, 196, (2011), 2889-2892, la formation de l'alliage Li_{4,5}Si s'accompagne d'une augmentation volumique de l'électrode pouvant atteindre 300 %. Par la suite, lors de la décharge, la délithiation de l'alliage entraine le phénomène inverse, à savoir la diminution du volume de la particule.

Ce phénomène et la répétition de ces cycles d'expansion/contraction de la particule de silicium va être à l'origine de contraintes mécaniques au sein de celle-ci, conduisant à sa décrépitation et à son amorphisation comme décrit dans la publication de Lecras et al., Solid State Ionic, 36-44, 2012. Les particules de silicium vont se fracturer au fur et à mesure des cycles.

Ainsi, chaque cycle de charge/décharge produira de la surface active et fraiche pour la réduction de l'électrolyte, ne conduisant pas une interface solide-électrolyte stable (SEI pour « Solid-electrolyte interphase »), élément essentiel à un bon fonctionnement de l'accumulateur, et créant ainsi une perte irréversible de capacité à chaque cycle.

Le silicium nanostructuré inférieur à une taille critique estimée à environ 150 nanomètres a été proposé (Liu et al., ACS nano, 6, 1522-1531, 2012) de façon à réduire la dégradation de la durée de vie lors des cycles de charge-décharge, grâce à leur fracturation plus limitée.

L'expansion volumique du silicium, quel que soit sa taille, ou des éléments capables de former un alliage avec le lithium ne peut pas être complètement contenu pour le moment. De nombreux travaux sur la formulation d'électrode ont donc pour objectif de s'adapter à celle-ci. Sur cette thématique, le travail est par exemple très souvent mené sur l'environnement de la particule afin de limiter la déformation de l'électrode.

Par exemple, les mélanges de différents composés avec le silicium ou encore le recours aux revêtements de différentes natures sont très souvent cités par exemple dans les documents suivants FR2970245, US8277974, US7906236 et CN102931413.

Cependant, cela ne permet pas encore d'atteindre des performances intéressantes en termes de perte de capacité de charge au fur et à mesure des cycles de charge-décharge.

Le recours aux fibres de carbones, aux nano fibres ou aux nanotubes de carbones, avec le silicium ou avec le graphite-silicium, ainsi que les modes opératoires associés sont une des solutions potentielles explorées ces dernières années (US20060035149, JP2005310760, US20080145757, WO201036648). JPH0226867 divulgue un matériau composite comprenant 100 parties en poids de graphite naturel et de 0,5 à 3 parties en poids d'un ou plusieurs composés choisis parmi le silicium, le carbure de bore et le ferrosilicium, et de 2 à 10 parties en poids de résine phénolique.

Cependant, l'utilisation des fibres de carbones n'est par ailleurs pas anodine, du fait d'un facteur de forme très particulier de ces particules. Celles-ci posent certains problèmes de processabilité, notamment par leur agglomération au sein du mélange dans le procédé en voie aqueuse.

De plus, elles sont relativement chères comparées au graphite et doivent donc être utilisées en quantité limitée pour que ces électrodes soient commercialement viables.

Il a maintenant été découvert qu'un matériau à base de graphite comprenant une quantité limitée de silicium et de fibres de carbone, ces deux éléments étant préalablement mélangés et broyés de manière intime ensemble et répartis de manière homogène dans la base de graphite pouvait résoudre les problèmes de l'art antérieur, à savoir augmenter la capacité énergétique de l'électrode contenant un tel matériau tout en gardant une durée de vie (et donc une cyclabilité) importante.

L'invention a donc pour objet un matériau composite selon la revendication 1 pour électrode à base de carbone graphite comprenant un broyât, dispersé au sein du carbone graphite, d'un mélange intime de silicium et de fibres de carbone.

Ce matériau selon l'invention entre dans la composition d'une électrode pour batterie de stockage d'énergie électrique.

Par conséquent, l'invention a aussi pour objet une électrode pour batterie de stockage d'énergie électrique comprenant le matériau tel que défini ci-dessus.

L'électrode selon l'invention présente une capacité énergétique plus importante que pour une électrode constituée uniquement de graphite.

L'électrode selon l'invention a de plus une bonne cyclabilité et donc une durée de vie améliorée.

L'invention a aussi pour objet une batterie lithium-ion de stockage de l'énergie électrique comprenant une électrode négative et une électrode positive, ladite électrode négative étant selon l'invention.

Enfin, l'invention a pour objet un procédé de préparation d'une électrode selon l'invention comprenant les étapes suivantes :
i) broyage mécanique de fibres de carbone et de particules de silicium en présence d'un solvant,
ii) séchage du mélange obtenu à l'étape i) jusqu'à disparition totale du solvant,
iii) ajout du broyât séché obtenu à l'étape ii) à des particules de carbone graphite,
iv) mélange de l'ensemble en présence d'au moins un liant et éventuellement d'eau,
v) étalement du mélange obtenu à l'étape iv) sur un collecteur de courant,
vi) séchage.

D'autres avantages et caractéristiques de l'invention apparaitront plus clairement à l'examen de la description détaillée et des dessins annexés sur lesquels :
- la figure 1 représente un cliché au microscope électronique à balayage d'une électrode comparative,
- la figure 2 représente un cliché au microscope électronique à balayage d'une électrode selon l'invention,
- la figure 3 compare les capacités spécifiques de désinsertion d'une électrode selon l'invention et d'une électrode comparative en fonction du nombre de cycles de charge/décharge,
- la figure 4 compare la rétention de la capacité de décharge d'une électrode selon l'invention et de deux électrodes comparatives en fonction du nombre de cycle de charge/décharge, en cellule Li-ion complète.

Dans la description de l'invention, le terme « à base de » est synonyme de « comprenant majoritairement ».

Par « dispersion », on entend au sens de la présente invention que le broyât est réparti de manière homogène dans la base de graphite.

Par « homogène », on entend au sens de la présente invention et de façon classique pour un homme du métier, que la concentration en broyât dans un volume donné du matériau soit identique à la concentration en broyât dans le volume total du matériau.

Par « mélange intime », on entend qu'il n'y a pas de ségrégation entre le silicium et les fibres de carbone, c'est-à-dire que les deux matériaux sont mélangés de manière homogène.

Par « température ambiante », on entend de préférence une température comprise entre 20°C et 30°C, et de préférence d'environ 25°C.

Dans ce qui va suivre, et à moins d'une autre indication, les bornes d'un domaine de valeurs sont comprises dans ce domaine, notamment dans l'expression « compris entre ».

Le matériau composite selon l'invention est à base de carbone graphite.

Ainsi, le carbone graphite est le constituant majoritaire du matériau composite selon l'invention, il constitue la matrice du matériau composite.

Le carbone graphite peut être choisi parmi les carbones graphites synthétiques, et naturels à partir de précurseurs naturels suivis d'une purification et/ou d'un post traitement.

De manière préférée, le carbone graphite du matériau selon l'invention est choisi parmi les carbones graphites synthétiques sous forme de paillettes.

Le carbone graphite représente de 85 à 97 % en poids, et en particulier de 89 à 95 % en poids, par rapport au poids total du matériau composite.

Le carbone graphite se présente généralement sous forme de particules de taille moyenne comprise entre 1 et 100 µm, de préférence entre 5 et 80 µm, et en particulier entre 5 et 60 µm.

De préférence il s'agit de particules patatoïdes ou sphères allongées dont une première dimension moyenne est comprise entre 5 et 10 microns et les autres dimensions moyennes sont comprises entre 10 et 20 microns.

La taille des particules est généralement mesurée par granulométrie LASER.

Ces particules de carbone graphite présentent généralement une surface spécifique comprise entre 6 et 8 m²/g.

A titre de carbone graphite utilisable selon l'invention, on peut notamment citer le TIMREX® SLP30 vendu par la société TIMCAL.

Le matériau composite selon l'invention comprend également un broyât d'un mélange intime de silicium et de fibres de carbone.

Le silicium utilisé dans le matériau composite selon l'invention est originellement sous la forme de particules sphériques élémentaires ou sous la forme d'un agglomérat secondaire de particules sphériques élémentaires dont la taille moyenne des particules élémentaires est inférieure ou égale à 4 µm, de préférence inférieure ou égale à 300 nm, et en particulier inférieure ou égale à 150 nm.

Ces particules ou ces agglomérats de particules présentent généralement une surface spécifique BET (Brunauer, Emett et Teller) comprise entre 10 et 20 m²/g, de préférence comprise entre 11 et 15 m²/g.

La taille des particules de silicium est généralement aussi mesurée par granulométrie laser.

A titre de silicium utilisable selon l'invention, on peut notamment citer le silicium vendu par la société Stile.

De manière préférée, le silicium représente de 0,1 à 15 % en poids, de préférence de 1 à 10 % en poids, et en particulier de 3 à 8 % en poids, par rapport au poids total du matériau composite.

Les fibres de carbone du matériau composite selon l'invention sont de préférence des fibres de carbone à croissance en phase vapeur (VGCF pour « Vapor Grown Carbon Fibers »).

A titre de fibres de carbone, on peut notamment citer les fibres de carbone de type VGCF commercialisées par la société Showa Denko, ou les fibres TENAX de la société Toho.

De manière préférée, les fibres de carbones représentent de 0,1 à 10 % en poids, de préférence de 0,5 à 5 % en poids, et en particulier de 1 à 3 % en poids, par rapport au poids total du matériau composite.

Les fibres de carbone représentent généralement une longueur moyenne comprise entre 1 et 40 µm, de préférence entre 5 et 20 µm, et un diamètre inférieur ou égal à 150 nm.

La taille des fibres de carbone est généralement mesurée au moyen d'un microscope électronique à balayage.

De manière tout particulièrement préférée dans l'électrode selon l'invention, le rapport pondéral de la quantité de silicium sur la quantité de fibres de carbone est compris entre 1 et 10, de préférence entre 1 et 5, et en particulier entre 2 et 3.

Le broyât de silicium et de fibres de carbone est obtenu généralement par un broyage mécanique.

De manière préférée, le broyage mécanique est un broyage à haute énergie.

Il s'effectue de préférence au moyen d'un broyeur planétaire à billes d'agate.

Le broyeur planétaire utilisé dans le procédé selon l'invention comprend généralement 150 g à 180 g de billes d'agate.

Le broyage est généralement effectué à une vitesse de rotation de 500 tours/minutes pendant 1 heures 30.

Par exemple, on pourra utiliser le broyeur de référence PM100 commercialisé par Retsch.

L'invention a aussi pour objet une électrode pour batterie de stockage d'énergie électrique comprenant le matériau tel que défini ci-dessus, et un ou plusieurs liants.

De manière préférée, le ou les liants peuvent être choisis parmi les latex de polybutadiène-styrène, les polybutadiène-nitrile et les polymères organiques, et de préférence parmi les latex de polybutadiène-styrène, les polybutadiène-nitrile, les polyesters, les polyéthers, les dérivés polymère de méthylméthacrylate, les dérivés polymères d'acrylonitrile, la carboxyle méthyle cellulose et ses dérivés, les polyvinyles acétates ou polyacrylate acétate, les polymères de fluorure de vinylidène, et leurs mélanges.

Le ou les liants peuvent représenter de 0,1 à 10 % en poids, de préférence de 0,2 à 5 % en poids, et en particulier de 0,5 à 3 % en poids, par rapport au poids total de l'électrode.

De manière préférée dans un mode de réalisation, l'électrode selon l'invention comprend au moins deux liants.

De manière particulière dans ce mode de réalisation, l'électrode comprend un premier liant choisi parmi les polyesters, les polyéthers, les dérivés polymère de méthylméthacrylate, les dérivés polymères d'acrylonitrile, la carboxyle méthyle cellulose (CMC) et ses dérivés, les polyvinyles acétates ou polyacrylate acétate et les polymères de fluorure de vinylidène, et un second liant choisi parmi les latex de polybutadiène-styrène.

L'invention a également pour objet une cellule lithium-ion de stockage de l'énergie électrique comprenant une électrode négative et une électrode positive, ladite électrode négative étant telle que définie ci-dessus.

L'électrode positive de la cellule lithium-ion selon l'invention peut être toute électrode positive classiquement utilisée dans les batteries lithium-ion.

La cellule comprend généralement un séparateur qui peut être choisi parmi tous les séparateurs utilisés classiquement par l'homme du métier.

L'électrode est en général imbibée d'un électrolyte, de préférence liquide.

Cet électrolyte comprend généralement un ou plusieurs sels de lithium et un ou plusieurs solvants.

Le ou les sels de lithium peuvent être choisis parmi le lithium bis[(trifluorométhyl)sulfonyl]imide (LiN(CF₃SO₂)₂), le lithium trifluorométhane sulfonate (LiCF₃SO₃), le lithium bis(oxalato)borate (LiBOB), le lithium bis(perfluoroéthylsulfonyl)imide (LiN(CF₃CF₂SO₂)₂), LiClO₄, LiAsF₆, LiPF₆, LiBF₄, Lil, LiCH₃SO₃, LiB(C₂O₄)₂, LiR_{F}SOSR_{F}, LiN(R_{F}SO₂)₂, LiC(R_{F}SO₂)₃, R_{F} étant un groupement choisi parmi un atome de fluor et un groupement perfluoroalkyle comportant entre un et huit atomes de carbone.

Le ou les sels de lithium sont, de préférence, dissous dans un ou plusieurs solvants choisis parmi les solvants polaires aprotiques, par exemple, l'éthylène carbonate (noté « EC »), le propylène carbonate (PC), le diméthylcarbonate (DMC), le diéthylcarbonate (noté « DEC ») et le méthyléthylcarbonate (EMC).

Enfin, l'invention a pour objet une batterie lithium-ion comprenant une ou plusieurs cellules telles que définies précédemment.

L'invention a aussi pour objet un procédé de préparation d'une électrode telle que définie ci-dessus comprenant les étapes suivantes :
i) broyage mécanique de fibres de carbone et de particules de silicium en présence d'un solvant,
ii) séchage du mélange obtenu à l'étape i) jusqu'à disparition totale du solvant,
iii) ajout du broyât séché obtenu à l'étape ii) à des particules de carbone graphite,
iv) mélange de l'ensemble en présence d'au moins un liant et éventuellement d'eau,
v) étalement du mélange obtenu à l'étape iv) sur un collecteur de courant,
vi) séchage.

De manière préférée dans le procédé selon l'invention, le broyage de l'étape i) s'effectue au moyen d'un broyeur planétaire à billes d'agate.

Le broyage de l'étape i) s'effectue généralement à température ambiante pendant une durée comprise entre 30 mn et 2 heures.

Le solvant utilisé dans l'étape i) est généralement du cyclohexane ou de l'hexane.

Dans l'étape ii), le séchage s'effectue généralement au moyen d'un étuve, de préférence une étuve ventilée.

De manière générale, l'étape ii) de séchage s'effectue à une température comprise entre 40°C et 100°C, de préférence environ 60°C et pendant 24 à 48 heures.

Le mélange du broyat et des particules de carbone graphite de l'étape iii) s'effectue généralement à température ambiante pendant une durée comprise entre 5 minutes et une heure.

Le mélange obtenu à la fin de l'étape iv) est une encre.

L'encre obtenue à l'étape iv) comprend généralement une teneur en extrait sec comprise entre 40 et 60 %.

L'encre est ensuite étalée sur un collecteur de courant, puis l'électrode est séchée.

Le collecteur de courant peut être choisi parmi des feuilles métalliques comprenant des métaux tels que le cuivre, le nickel, le titane, l'aluminium, l'acier, l'acier inoxydable et leurs alliages, et de préférence le cuivre et le nickel.

La présente invention est illustrée de manière non-limitative par les exemples suivants.

### Exemples

### Exemple 1 : capacité spécifique en désinsertion

### Préparation des matériaux composites

Un matériau composite A selon l'invention et un matériau composite B comparatif de même composition sont préparés selon les protocoles suivants et dans les proportions telles qu'indiquées dans le tableau 1 ci-dessous.

**Tableau 1**

| **Matériaux composites A et B** | **Teneur (en poids pour 100 g)** |
|---|---|
| Fibres de carbone⁽¹⁾ | 2 |
| Silicium⁽²⁾ | 5 |
| Carbone graphite⁽³⁾ | 93 |

| | |
|---|---|
| (1) fibres de carbone à croissance en phase vapeur (VGCF) (2) taille moyenne des particules : 300 nm (3) TIMREX® SLP30 vendu par la société TIMCAL | |

### 1) Pour le matériau composite A

### Broyage (étape i)

Le broyage mécanique est réalisé au moyen d'un broyeur planétaire à billes d'agate de marque Retsch, comprenant 7 g de mélange de fibres de carbone et de silicium. La quantité de billes d'agate est de 150 g. Le mélange ainsi constitué est broyé pendant 1 heure 30 à 500 tours/min dans un alcane à longue chaînes de type cyclohexane ou hexane, les fibres de carbone pouvant alors avoir une taille comprise entre 2 et 20µm et un diamètre inférieur ou égal à 150nm, les particules de silicium pouvant alors avoir une taille inférieure ou égale à 4µm.

### Séchage (étape ii)

Après broyage, le mélange constitué par les fibres de carbone et le silicium est séché pendant 24 à 48 heures dans une étuve ventilée et munie d'une extraction à la température de 55°C.

### Mélange (étape iii)

Le broyat est ensuite pesé au moyen d'une balance de précision, puis dispersé dans un bécher double enveloppe contenant 10 g d'eau au moyen d'un mélangeur à hélice de dispersion de 30 mm de diamètre de marque Dispermat à 6000 tours par minutes pendant 15 minutes.

Le carbone graphite est ensuite ajouté.

### 2) Pour le matériau composite B

L'étape de broyage n'est pas appliquée.

Les fibres de carbone et le silicium sont pesées dans les mêmes proportions que pour la préparation du matériau composite A au moyen d'une balance de précision, puis simplement dispersées successivement dans un bécher double enveloppe contenant 11 g d'eau au moyen d'un mélangeur à hélice de dispersion de 30 mm de diamètre de marque Dispermat à 6000 tours par minutes pendant 15 minutes.

### Préparation des électrodes

Une électrode A selon l'invention (matériau composite A) et une électrode B comparative (matériau composite B) de même composition sont préparées selon le protocole suivant et avec les ingrédients et les teneurs tels qu'indiqués dans le tableau 2.

Tous les pourcentages sont indiqués en poids.

**Tableau 2**

| **Electrodes A et B** | **Teneur (en poids pour 100 g)** |
|---|---|
| Matériau composite | 96 |
| Liant 1⁽¹⁾ | 2 |
| Liant 2⁽²⁾ | 2 |

| | |
|---|---|
| (1) carboxyle méthyle cellulose (CMC) (2) latex de type styrène-butadiène en émulsion à 51 % dans l'eau (BASF LD417) | |

### Préparation des encres (étape iv)

Le liant 1 (CMC) est ajouté au matériau composite.

Le matériau composite (A ou B), l'eau et le liant 1 sont ensuite mélangés au moyen d'un mélangeur à hélice de dispersion de 30 mm de diamètre de marque Dispermat à 3700 tours/mn pendant 5 minutes.

Le mélange obtenu est ensuite traité dans un broyeur de type tricylindre de marque Exakt et de type PBRO01EXA à la vitesse de 300 tours par minutes.

Le liant 2 est ensuite ajouté.

La quantité de solvant (eau) présent dans le mélange ainsi constitué représente de 52 à 54 % en poids, par rapport au poids total du mélange.

Les encres ainsi obtenues sont utilisées pour préparer une électrode A selon l'invention et une électrode B comparative.

### Etalement et séchage (étape v et vi)

Les électrodes sont préparées par l'étalement d'un film d'environ 90 à 120 µm d'épaisseur des encres précédemment préparées sur un collecteur de courant en cuivre de 10 µm d'épaisseur. Les électrodes sont ensuite séchées pour atteindre une épaisseur de 50 à 60 microns.

Les électrodes ainsi réalisées sont densifiées afin d'obtenir une porosité du composite située entre 30 et 40 % par calandrage à chaud

Les électrodes obtenues (A selon l'invention et B comparative) à l'issue de ce procédé sont analysées au moyen de la microscopie électronique à balayage (MEB).

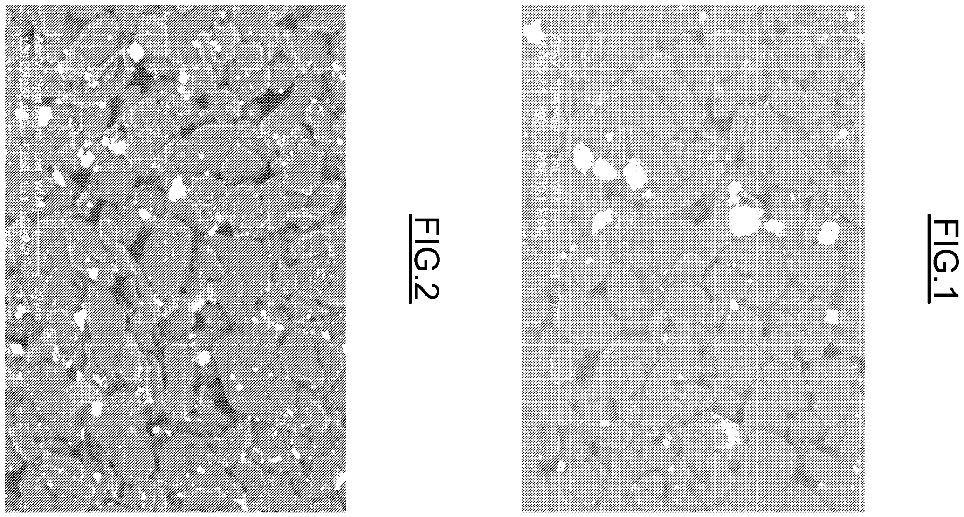

La figure 1 représente un cliché au microscope électronique à balayage de l'électrode B comparatif.
La figure 2 représente un cliché au microscope électronique à balayage de l'électrode A selon l'invention.

Les grains blancs sont la signature chimique du silicium.

Les clichés illustrent que le traitement préalable des fibres de carbone et du silicium confère une homogénéité de composition au mélange.

En effet, le broyage des fibres de carbone avec le silicium conduit à une dispersion plus homogène de ces deux composés dans la matrice de carbone graphite.

### Préparation des cellules

Des cellules au lithium de type « pile bouton » sont préparées par empilement d'une électrode négative au lithium, d'une électrode positive tel que préparée ci-dessus et d'un séparateur de type Celgard en polymère, la face de l'électrode préparée ci-dessus étant en regard de l'électrode négative au lithium métallique.

Les électrodes négatives sont formées par un film circulaire de lithium de 16 mm de diamètre et de 100 µm d'épaisseur, déposé sur un disque d'inox.

Le séparateur est imbibé par un électrolyte liquide à base de LIPF₆ à une concentration de 1 mol/L dans un mélange de carbonates.

### Test des cellules

La cellule A selon l'invention (correspondant à l'électrode A) ainsi que la cellule B comparative (correspondant à l'électrode B) ont été testées à une température de 20°C selon le protocole suivant
- charge au régime de 0,1 C en mode intensiostatique (intensité du courant électrique constant) jusqu'à atteindre un potentiel de 0,01 V par rapport au couple Li⁺/Li, suivie d'une phase en mode potentiostatique (potentiel du courant électrique constant) au potentiel de 0,01 V jusqu'à ce que le courant d'insertion soit inférieur ou égal à 0,001 C, puis
- décharge au régime 0,1 C en mode intensiostatique jusqu'à atteindre un potentiel de 1,2 V par rapport au couple Li⁺/Li,
- la capacité spécifique en désinsertion (qui correspond à la capacité contenue dans l'électrode négative lors de la décharge de la cellule Li-ion) est mesurée puis le protocole est recommencé.

La capacité spécifique en désinsertion correspond à la quantité d'électricité en mA délivrée par l'électrode testée multipliée par le temps séparant le début de la phase de charge et l'atteinte du potentiel de coupure de la charge, divisée par la masse du matériau actif composite déposé sur l'électrode.

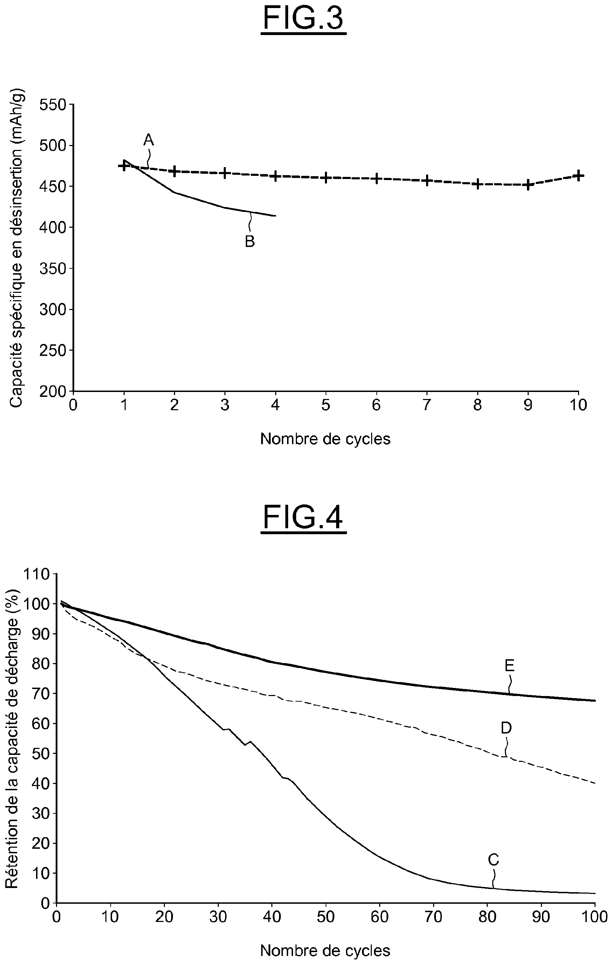

Les résultats en terme de performances électrochimiques sont illustrés sur la figure 3 qui décrit la capacité spécifique en désinsertion des électrodes A et B, en fonction du nombre de cycles de charge/décharge successifs.

Cette figure montre que la capacité spécifique en désinsertion chute fortement dans le cas de l'électrode B dès les premiers cycles d'utilisation.

En revanche, l'électrode A selon l'invention conserve une capacité spécifique en désinsertion relativement constante.

### Exemple 2 : rétention de la capacité de décharge

Deux électrodes C et D comparatives et une électrode E selon l'invention sont préparées avec les caractéristiques pour chaque électrode telles qu'indiquées dans le tableau 3 ci-dessous.

**Tableau 3**

| Electrode | **Présence de fibres de carbone dans le matériau composite** | **Broyage des fibres de carbone et du silicium** |
|---|---|---|
| c | Non | Non |
| D | Oui | Non |
| E | Oui | Oui |

### Préparation des matériaux composites

Les matériaux composites (C, D et E) correspondants sont préparés selon les protocoles suivants et dans les proportions telles qu'indiquées dans le tableau 4 ci-dessous.

Les teneurs sont indiquées en poids pour 100 g.

**Tableau 4**

| **Matériau composite** | **C** | **D** | **E** |
|---|---|---|---|
| Fibres de carbone⁽¹⁾ | - | 2 | 2 |
| Silicium⁽²⁾ | 5 | 5 | 5 |
| Carbone graphite⁽³⁾ | 95 | 93 | 93 |

| | | | |
|---|---|---|---|
| (1) fibres de carbone à croissance en phase vapeur (VGCF) (2) taille moyenne des particules : 300 nm (3) TIMREX® SLP30 vendu par la société TIMCAL | | | |

### 1) Pour le matériau composite C

Le silicium est simplement mélangé au carbone graphite.

### 2) Pour le matériau composite D

La préparation du matériau composite D est identique à la préparation du matériau composite B décrit ci-dessus.

### 3) Pour le matériau composite E

La préparation du matériau composite E est identique à la préparation du matériau composite A décrit ci-dessus.

### Préparation des électrodes

Les trois électrodes C, D et E sont préparées selon le protocole déjà décrit pour les électrodes A et B et avec les ingrédients et les teneurs telles qu'indiquées dans le tableau 5 ci-dessous.

Tous les pourcentages sont indiqués en poids.

**Tableau 5**

| **Electrodes C, D et E** | **Teneur (en poids pour 100 g)** |
|---|---|
| Matériau composite | 96 |
| Liant 1⁽¹⁾ | 2 |
| Liant 2⁽²⁾ | 2 |

| | |
|---|---|
| (1) carboxyle méthyle cellulose (CMC) (2) latex de type styrène-butadiène en émulsion à 51 % dans l'eau (BASF LD417) | |

Les électrodes négatives obtenues C, D et E présentent une surface de 12,25 cm².

### Préparation des cellules

Des cellules lithium-ion sont préparées par l'empilement d'une électrode négative telle que préparée ci-dessus (C, D ou E), d'une électrode positive à base de LiNi_{1/3}Mn_{1/3}Co_{1/3}O₂ et possédant une surface de 10,2 cm² et d'un séparateur de type Celgard en polymère, la face de l'électrode négative étant en regard de l'électrode positive.

Le séparateur est imbibé par un électrolyte liquide à base de LIPF₆ à une concentration de 1 mol/L dans un mélange de carbonates.

### Test des cellules

La cellule E selon l'invention (correspondant à l'électrode E) ainsi que les cellules C et D comparatives (correspondants aux électrodes C et D) ont été testées à une température de 20°C selon le protocole suivant
- Formation de la cellule par une charge au régime de 0,1 C en mode intensiostatique jusqu'à atteindre un potentiel de 4,15 V, suivie d'une décharge en mode intensiostatique jusqu'à 2,8 V.

Cette étape est réalisée trois fois.

La cyclabilité de la cellule est ensuite testée afin d'évaluer la durée de vie de la cellule.

Il consiste en : - une charge en mode intensiostatique au régime de 1 C jusqu'à 4,15 V, suivie d'une décharge en mode intensiostatique au régime de 1 C jusqu'à 2,8 V. le cycle de charge/décharge étant répété autant de fois que nécessaire à l'étude.

Les résultats pour les trois cellules C, D et E sont rassemblés dans le graphique de la figure 4 et dans le tableau 6 ci-dessous.

La figure 4 représente la rétention de la capacité de décharge, c'est-à-dire la capacité énergétique encore disponible lors de la décharge de la cellule au fur et à mesure des cycles de charge/décharge.

La rétention de la capacité de décharge est donc un indicateur de la durée de vie de la batterie. Lorsque cette rétention devient trop faible, la cellule devient inutilisable.

**Tableau 6**

| **Cellule** | **Capacité initiale de la cellule en mA/h** | **Pourcentage de capacité de décharge au cycle 100** |
|---|---|---|
| **C (comparative)** | 16,5 | 3 % |
| **D (comparative)** | 28,4 | 42 % |
| **E (invention)** | 25,8 | 68 % |

Ces données montrent que la capacité initiale de la cellule est fortement augmentée lorsque des fibres de carbone sont présentes dans le matériau composite de l'électrode (comparaison cellules C et D, et C et E).

En revanche, la capacité de décharge au cycle 100 est fortement améliorée lorsque les fibres de carbone et le silicium ont été préalablement broyés avant d'être répartis dans le carbone graphite (comparaison cellules D et E).

## Revendications

1. Matériau composite pour électrode à base de carbone graphite comprenant un broyât, dispersé au sein du carbone graphite, d'un mélange intime de silicium et de fibres de carbone le carbone graphite représentant de 85 à 97% en poids par rapport au poids total du matériau composite.

2. Matériau selon la revendication 1, **caractérisé en ce que** le carbone graphite représente de 89 à 95 % en poids, par rapport au poids total du matériau composite.

3. Matériau selon la revendication 1 ou 2, **caractérisé en ce que** le carbone graphite est sous forme de particules de taille moyenne comprise entre 1 et 100 µm, de préférence entre 5 et 80 µm, et en particulier entre 5 et 60 µm.

4. Matériau selon l'une quelconque des revendications précédentes, **caractérisé en ce que** le silicium représente de 0,1 à 15 % en poids, de préférence de 1 à 10 % en poids, et en particulier de 3 à 8 % en poids, par rapport au poids total du matériau composite.

5. Matériau selon l'une quelconque des revendications précédentes, **caractérisé en ce que** le silicium est sous forme de particules de taille moyenne inférieure ou égale à 4 µm, de préférence inférieure ou égale à 300 nm, et en particulier inférieure ou égale à 150 nm.

6. Matériau selon l'une quelconque des revendications précédentes, **caractérisé en ce que** les fibres de carbone sont des fibres de carbone à croissance en phase vapeur (VGCF).

7. Matériau selon l'une quelconque des revendications précédentes, **caractérisé en ce que** les fibres de carbone représentent de 0,1 à 10 % en poids, de préférence de 0,5 à 5 % en poids, et en particulier de 1 à 3 % en poids, par rapport au poids total du matériau composite.

8. Matériau selon l'une quelconques des revendications précédentes, **caractérisé en ce que** les fibres de carbones présentent une longueur moyenne comprise entre 1 et 40 µm, de préférence entre 5 et 20 µm, et un diamètre inférieur ou égal à 150 nm.

9. Matériau selon l'une quelconque des revendications précédentes, **caractérisé en ce que** le rapport pondéral de la quantité de silicium sur la quantité de fibres de carbone est compris entre 1 et 10, de préférence entre 1 et 5, et en particulier entre 2 et 3.

10. Electrode pour batterie de stockage d'énergie électrique comprenant le matériau tel que défini dans l'une quelconque des revendications précédentes, et un ou plusieurs liants.

11. Electrode selon la revendication 10 **caractérisée en ce que** le ou lesdits liants sont choisis parmi les latex de polybutadiène-styrène, les polybutadiène-nitrile et les polymères organiques, et de préférence parmi les latex de polybutadiène-styrène, les polybutadiène-nitrile, les polyesters, les polyéthers, les dérivés polymère de méthylméthacrylate, les dérivés polymères d'acrylonitrile, la carboxyle méthyle cellulose et ses dérivés, les polyvinyles acétates ou polyacrylate acétate, les polymères de fluorure de vinylidène, et leurs mélanges.

12. Electrode selon la revendication 11, **caractérisée en ce que** le ou les liants représentent de 0,1 à 10 % en poids, de préférence de 0,2 à 5 % en poids, et en particulier de 0,5 à 3 % en poids, par rapport au poids total de l'électrode.

13. Cellule lithium-ion de stockage de l'énergie électrique comprenant une électrode négative et une électrode positive, ladite électrode négative étant telle que définie dans l'une quelconque des revendications précédentes.

14. Batterie de stockage de l'énergie électrique comprenant une ou plusieurs cellules telles que définies dans la revendication 13.

15. Procédé de préparation d'une électrode selon l'une quelconque des revendications 10 à 12 comprenant les étapes suivantes :
i) broyage mécanique de fibres de carbone et de particules de silicium en présence d'un solvant,
ii) séchage du mélange obtenu à l'étape i) jusqu'à disparition totale du solvant,
iii) ajout du broyât séché obtenu à l'étape ii) à des particules de carbone graphite,
iv) mélange de l'ensemble en présence d'au moins un liant et éventuellement d'eau,
v) étalement du mélange obtenu à l'étape iv) sur un collecteur de courant,
vi) séchage.

16. Procédé selon la revendication 15, **caractérisé en ce que** le broyage de l'étape i) s'effectue au moyen d'un broyeur planétaire à billes d'agate.

## Patentansprüche

1. Verbundwerkstoff für Elektroden auf Basis von Graphitkohlenstoff, der ein in dem Graphitkohlenstoff fein verteiltes Zerkleinerungsprodukt aus einem innigen Gemisch aus Silicium und Kohlenstofffasern umfasst, wobei der Graphitkohlenstoff bezogen auf das Gesamtgewicht des Verbundwerkstoffs 85 bis 97 Gewichts-% ausmacht.

2. Werkstoff nach Anspruch 1, **dadurch gekennzeichnet, dass** der Graphitkohlenstoff bezogen auf das Gesamtgewicht des Verbundwerkstoffs 89 bis 95 Gewichts-% ausmacht.

3. Werkstoff nach Anspruch 1 oder 2, **dadurch gekennzeichnet, dass** der Graphitkohlenstoff in Form von Teilchen mit einer mittleren Größe zwischen 1 und 100 µm, vorzugsweise zwischen 5 und 80 µm und insbesondere zwischen 5 und 60 µm vorliegt.

4. Werkstoff nach einem der vorhergehenden Ansprüche, **dadurch gekennzeichnet, dass** das Silicium bezogen auf das Gesamtgewicht des Verbundwerkstoffs 0,1 bis 15 Gewichts-%, vorzugsweise 1 bis 10 Gewichts-% und insbesondere 3 bis 8 Gewichts-% ausmacht.

5. Werkstoff nach einem der vorhergehenden Ansprüche, **dadurch gekennzeichnet, dass** das Silicium in Form von Teilchen mit einer mittleren Größe kleiner gleich 4 µm, vorzugsweise kleiner gleich 300 nm und insbesondere kleiner gleich 150 nm vorliegt.

6. Werkstoff nach einem der vorhergehenden Ansprüche, **dadurch gekennzeichnet, dass** die Kohlenstofffasern aus der Dampfphase hergestellte Kohlenstofffasern (VGCF) sind.

7. Werkstoff nach einem der vorhergehenden Ansprüche, **dadurch gekennzeichnet, dass** die Kohlenstofffasern bezogen auf das Gesamtgewicht des Verbundwerkstoffs 0,1 bis 10 Gewichts-%, vorzugsweise 0,5 bis 5 Gewichts-% und insbesondere 1 bis 3 Gewichts-% ausmachen.

8. Werkstoff nach einem der vorhergehenden Ansprüche, **dadurch gekennzeichnet, dass** die Kohlenstofffasern eine mittlere Länge zwischen 1 und 40 µm, vorzugsweise zwischen 5 und 20 µm sowie einen Durchmesser kleiner gleich 150 nm aufweisen.

9. Werkstoff nach einem der vorhergehenden Ansprüche, **dadurch gekennzeichnet, dass** das Gewichtsverhältnis der Menge an Silicium zur Menge an Kohlenstofffasern zwischen 1 und 10, vorzugsweise zwischen 1 und 5 und insbesondere zwischen 2 und 3 liegt.

10. Elektrode für eine Batterie zum Speichern von elektrischer Energie, die den Werkstoff nach einem der vorhergehenden Ansprüche sowie ein oder mehrere Bindemittel umfasst.

11. Elektrode nach Anspruch 10, **dadurch gekennzeichnet, dass** das oder die Bindemittel ausgewählt ist bzw. sind aus Styrol-Butadien-Latizes, Acrylnitril-Butadien-Kautschuken und organischen Polymeren sowie vorzugsweise aus Styrol-Butadien-Latizes, Acrylnitril-Butadien-Kautschuken, Polyestern, Polyethern, Methylmethacrylat-Polymerderivaten, Acrylnitril-Polymerderivaten, Carboxymethylcellulose und ihren Derivaten, Polyvinylacetaten oder Polyacrylatacetat, Vinylidenfluorid-Polymeren und ihren Mischungen.

12. Elektrode nach Anspruch 11, **dadurch gekennzeichnet, dass** das oder die Bindemittel bezogen auf das Gesamtgewicht der Elektrode 0,1 bis 10 Gewichts-%, vorzugsweise 0,2 bis 5 Gewichts-% und insbesondere 0,5 bis 3 Gewichts-% ausmacht bzw. ausmachen.

13. Lithium-Ionen-Zelle zum Speichern von elektrischer Energie, die eine negative Elektrode und eine positive Elektrode umfasst, wobei die negative Elektrode einem der vorhergehenden Ansprüche entspricht.

14. Batterie zum Speichern von elektrischer Energie, die eine oder mehrere Zellen nach Anspruch 13 umfasst.

15. Verfahren zur Herstellung einer Elektrode nach einem der Ansprüche 10 bis 12, das folgende Schritte umfasst:
i) mechanisches Zerkleinern von Kohlenstofffasern und von Siliciumteilchen in Gegenwart eines Lösungsmittels,
ii) Trocknen der in Schritt i) erhaltenen Mischung bis zum vollständigen Verschwinden des Lösungsmittels,
iii) Zugeben des in Schritt ii) erhaltenen getrockneten Zerkleinerungsprodukts zu Graphitkohlenstoffteilchen,
iv) Vermischen aller Bestandteile in Gegenwart von mindestens einem Bindemittel und gegebenenfalls Wasser,
v) Verteilen der in Schritt iv) erhaltenen Mischung auf einem Stromkollektor,
vi) Trocknen.

16. Verfahren nach Anspruch 15, **dadurch gekennzeichnet, dass** das Zerkleinern in Schritt i) mithilfe einer Planetenmühle mit Achatkugeln erfolgt.

## Claims

1. Composite material for an electrode based on graphite carbon comprising a ground product, dispersed within the graphite carbon, of an intimate mixture of silicon and of carbon fibres, the graphite carbon representing from 85% to 97% by weight, with respect to the total weight of the composite material.

2. Material according to Claim 1, **characterized in that** the graphite carbon represents from 89% to 95% by weight, with respect to the total weight of the composite material.

3. Material according to Claim 1 or 2, **characterized in that** the graphite carbon is in the form of particles with a mean size of between 1 and 100 µm, preferably between 5 and 80 µm and in particular between 5 and 60 µm.

4. Material according to any one of the preceding claims, **characterized in that** the silicon represents from 0.1% to 15% by weight, preferably from 1% to 10% by weight, and in particular from 3% to 8% by weight, with respect to the total weight of the composite material.

5. Material according to any one of the preceding claims, **characterized in that** the silicon is in the form of particles with a mean size of less than or equal to 4 µm, preferably of less than or equal to 300 nm, and in particular of less than or equal to 150 nm.

6. Material according to any one of the preceding claims, **characterized in that** the carbon fibres are vapour grown carbon fibres (VGCF).

7. Material according to any one of the preceding claims, **characterized in that** the carbon fibres represent from 0.1% to 10% by weight, preferably from 0.5% to 5% by weight, and in particular from 1% to 3% by weight, with respect to the total weight of the composite material.

8. Material according to any one of the preceding claims, **characterized in that** the carbon fibres exhibit a mean length of between 1 and 40 µm, preferably between 5 and 20 µm, and a diameter of less than or equal to 150 nm.

9. Material according to any one of the preceding claims, **characterized in that** the ratio by weight of the amount of silicon to the amount of carbon fibres is between 1 and 10, preferably between 1 and 5 and in particular between 2 and 3.

10. Electrode for an electrical energy storage battery comprising the material as defined in any one of the preceding claims and one or more binders.

11. Electrode according to Claim 10, **characterized in that** the said binder(s) are chosen from polybutadiene-styrene latexes, polybutadiene-nitriles and organic polymers and preferably from polybutadiene-styrene latexes, polybutadiene-nitriles, polyesters, polyethers, polymeric methyl methacrylate derivatives, polymeric acrylonitrile derivatives,
carboxymethylcellulose and derivatives thereof, polyvinyl acetates or polyacrylate acetate, vinylidene fluoride polymers and their mixtures.

12. Electrode according to Claim 11, **characterized in that** the binder(s) represent from 0.1% to 10% by weight, preferably from 0.2% to 5% by weight and in particular from 0.5% to 3% by weight, with respect to the total weight of the electrode.

13. Lithium-ion cell for the storage of electrical energy comprising a negative electrode and a positive electrode, the said negative electrode being as defined in any one of the preceding claims.

14. Electrical energy storage battery comprising one or more cells as defined in Claim 13.

15. Process for the preparation of an electrode according to any one of Claims 10 to 12, comprising the following stages:
i) mechanically grinding carbon fibres and silicon particles in the presence of a solvent,
ii) drying the mixture obtained in stage i) until the solvent has completely disappeared,
iii) adding the dried ground product obtained in stage ii) to graphite carbon particles,
iv) mixing the combined material in the presence of at least one binder and optionally of water,
v) spreading the mixture obtained in stage iv) over a current collector,
vi) drying.

16. Process according to Claim 15, **characterized in that** the grinding of stage i) is carried out by means of a planetary mill having agate beads.
